# EUROPÄISCHE PATENTSCHRIFT

(11) **EP 2 977 227 B1**
(45) Veröffentlichungstag und Bekanntmachung des Hinweises auf die Patenterteilung: **03.08.2022**
(21) Anmeldenummer: 15167500.6
(22) Anmeldetag: 13.05.2015
(51) Int. Cl.: B60C 1/00, C08L 7/00

(54) **SCHWEFELVERNETZBARE KAUTSCHUKMISCHUNG UND FAHRZEUGREIFEN**
SULPHUR LINKABLE NATURAL RUBBER MIXTURE AND VEHICLE TYRE
MÉLANGE DE CAOUTCHOUC RÉTICULABLE AU SOUFRE ET PNEU

(30) Priorität: 21.07.2014 DE 102014214144
(43) Veröffentlichungstag der Anmeldung: 27.01.2016
(73) Patentinhaber: Continental Reifen Deutschland GmbH, 30165 Hannover (DE)
(72) Erfinder: Pruß, Noa, 60598 Frankfurt (DE); Sá, Catarina, 30165 Hannover (DE); Guardalabene, Joe, 30163 Hannover (DE)
(74) Vertreter: Continental Corporation

(56) Entgegenhaltungen:
- EP-A1- 0 894 824
- EP-A1- 1 754 750
- WO-A1-2013/041400
- WO-A2-00/68027

## Beschreibung

Die Erfindung betrifft eine schwefelvernetzbare Kautschukmischung und einen Fahrzeugreifen.

Um gesetzlichen und ökologischen Anforderungen gerecht zu werden ist man bestrebt Fahrzeugreifen mit einem möglichst geringen Rollwiderstand zu versehen. Insbesondere der Laufstreifen und die Seitenwand von Fahrzeugreifen tragen maßgeblich zum Rollwiderstand des Reifens bei. Durch Anpassung der Rezepturen der jeweiligen Kautschukmischungen kann der Rollwiderstand verringert werden. Eine Möglichkeit ist insbesondere die Verringerung des Rußgehaltes. Allerdings verschlechtert sich hierdurch die elektrische Leitfähigkeit des Reifens. Auch hier muss der Reifen bestimmte gesetzliche Anforderungen und Grenzwerte erfüllen.

In der US 7727135 B2 und der US 2011/0194880 A1 werden Kautschukmischungen für leitfähige Walzen beschrieben, die z.B. Acrylnitril-Butadien-Kautschuk und ein Polymer, welches aus Ethylenoxid und Propylenoxid und Allylglycidylether aufgebaut ist, sowie Ruß und Calciumcarbonat als Füllstoff enthalten.

Die US 2013/0269787 A1 offenbart eine wasserquellbare Kautschukmischung, die ein Polymer, welches aus Ethylenoxid und Propylenoxid und Allylglycidylether aufgebaut ist, sowie einen Füllstoff wie beispielsweise Ruß, Kieselsäure oder Calciumcarbonat enthält.

Der vorliegenden Erfindung liegt die Aufgabe zugrunde, eine schwefelvernetzbare Kautschukmischung für Fahrzeugreifen bereitzustellen, mit der der Rollwiderstand von Fahrzeugreifen verbessert werden kann während die elektrische Leitfähigkeit auf gleichem Niveau bleibt oder sogar ebenfalls verbessert (erhöht) wird.

Gleichzeitig sollen die übrigen Eigenschaften und Indikatoren der Kautschukmischung wie insbesondere die Reißeigenschaften und/oder die Handling-Indikatoren, wie die Steifigkeit, nicht signifikant verschlechtert werden oder sogar ebenfalls verbessert werden.

Gelöst wird die Aufgabe erfindungsgemäß dadurch, dass die schwefelvernetzbare Kautschukmischung wenigstens folgende Bestandteile enthält:
- wenigstens ein Polymer, welches zu 84 bis 88 Gew.-% aus Ethylenoxid und zu 2 bis 4 Gew.-% aus Propylenoxid und zu 10 bis 12 Gew.-% aus Allylglycidylether aufgebaut ist, und
- wenigstens einen Dienkautschuk ausgewählt aus der Gruppe bestehend aus natürlichem Polyisopren und synthetiscchem Polyisopren und Butadien-Kautschuk und Styrol-Butadien-Kautschuk und
- wenigstens einen Füllstoff, wobei sie als wenigstens einen Füllstoff zumindest 0,1 bis 100 phr wenigstens eines Rußes enthält.

Eine weitere Aufgabe, die der vorliegenden Erfindung zugrunde liegt, besteht darin einen Fahrzeugreifen bereitzustellen, der einen geringeren Rollwiderstand bei gleicher oder erhöhter elektrischer Leitfähigkeit aufweist. Gelöst wird die Aufgabe dadurch, dass der Fahrzeugreifen in wenigstens einem Bauteil wenigstens eine Kautschukmischung mit oben genannten Bestandteilen aufweist. Bevorzugt weist der Fahrzeugreifen die Kautschukmischung wenigstens im Laufstreifen und/oder der Seitenwand auf. Bei dem Laufstreifen kann es sich um einen Laufstreifen aus einer einzigen Schicht handeln oder um einen Laufstreifen mit einer Cap/Base-Konstruktion, wobei die erfindungsgemäße Kautschukmischung sowohl in der Cap als auch der Base des erfindungsgemäßen Fahrzeugreifens enthalten sein kann. Bevorzugt handelt es sich um einen Laufstreifen mit einer Cap/Base-Konstruktion, wobei die erfindungsgemäße Kautschukmischung wenigstens in der Base des erfindungsgemäßen Fahrzeugreifens enthalten ist.

Unter "Cap" ist im Rahmen der vorliegenden Erfindung der mit der Fahrbahn in Berührung kommende Teil des Laufstreifens zu verstehen, der radial außen angeordnet ist (Laufstreifencap).

Unter "Base" ist im Rahmen der vorliegenden Erfindung der Teil des Laufstreifens zu verstehen, der radial innen angeordnet ist, und somit im Fahrbetrieb nicht mit der Fahrbahn in Berührung kommt (Laustreifenbase).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Es wurde gefunden, dass eine schwefelvernetzbare Kautschukmischung enthaltend wenigstens die oben genannten Bestandteile verbesserte Rollwiderstandsindikatoren sowie eine gleiche oder sogar teilweise erhöhte elektrische Leitfähigkeit aufweist.

Die übrigen Eigenschaften, insbesondere die Zugfestigkeit und die Steifigkeit bleiben auf einem gleichen Niveau oder werden sogar teilweise verbessert.

Somit zeichnet sich ein erfindungsgemäßer Fahrzeugreifen, der in wenigstens einem Bauteil wenigstens eine erfindungsgemäße Kautschukmischung aufweist, durch einen verringerten Rollwiderstand bei gleicher oder verbesserter elektrischer Leitfähigkeit aus. Im Folgenden werden die Bestandteile der erfindungsgemäßen Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Erfindungsgemäß enthält die Kautschukmischung wenigstens ein Polymer, welches zu 84 bis 88 Gew.% aus Ethylenoxid und zu 2 bis 4 Gew.% aus Propylenoxid und zu 10 bis 12 Gew.% aus Allylglycidylether aufgebaut ist Derartige Polymere sind zum Beispiel unter den Handelsnamen Zeospan^{®} der Firma Nippon Zeon erhältlich. Gemäß einer bevorzugten Ausführungsform der Erfindung ist das Polymer aus Ehtylenoxid und Propylenoxid und Allylglycidylether aufgebaut, wie beispielsweise Zeospan^{®} 8030 der Firma Nippon Zeon.

Gemäß der Erfindung ist das Polymer zu 84 bis 88 Gew.-% aus Ethylenoxid und zu 2 bis 4 Gew.-% aus Propylenoxid und zu 10 bis 12 Gew.-% aus Allylglycidylether aufgebaut. Mit einem derartigen Polymer ergeben sich überraschenderweise besonders gute (hohe) elektrische Leitfähigkeiten der erfindungsgemäßen schwefelvernetzbaren Kautschukmischung.

Die Bestimmung der Zusammensetzung des Polymers, welches zu 84 bis 88 Gew.% aus Ethylenoxid und zu 2 bis 4 Gew.% aus Propylenoxid und zu 10 bis 12 Gew.% aus Allylglycidylether aufgebaut ist erfolgt im Rahmen der vorliegenden Erfindung mittels ¹³C-NMR (D₂O; 90,6 MHz, Gerät 360MHz wide bore Bruker NMR)

Das Polymer wird bevorzugt in Mengen von 0,1 bis 99,9 phr, besonders bevorzugt 0,1 bis 50 phr, ganz besonders bevorzugt 3 bis 50 phr, wiederum ganz besonders bevorzugt 3 bis 35 phr und hierbei wiederum bevorzugt 3 bis 15 phr, in der erfindungsgemäßen Kautschukmischung eingesetzt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Im Rahmen der vorliegenden Erfindung zählt die Menge an Polymer welches zu 84 bis 88 Gew.% aus Ethylenoxid und zu 2 bis 4 Gew.% aus Propylenoxid und zu 10 bis 12 Gew.% aus Allylglycidylether aufgebaut ist zu den Hundert Teilen Kautschuk der phr-Berechnung, sofern nicht ausdrücklich anders angegeben. Es ist denkbar, dass das Polymer bei der Herstellung der erfindungsgemäßen Kautschukmischung zusammen mit ggf. anderen Kautschuken in wenigstens einer Grundmischstufe zugegeben wird. Es ist auch denkbar, dass das Polymer zu einem späteren Zeitpunkt zugegeben wird. Die gemäß vorliegender Erfindung erfolgte Definition der Berechnung der Mengenangaben soll somit die Art und Weise der Zugabe des Polymers nicht einschränken.

Die folgenden Angaben zu den Mengen der weiteren Bestandteile in der Kautschukmischung beziehen sich somit auf 100 Gewichtsteile Dienkautschuk und Polymer welches zu 84 bis 88 Gew.% aus Ethylenoxid und zu 2 bis 4 Gew.% aus Propylenoxid und zu 10 bis 12 Gew.% aus Allylglycidylether aufgebaut ist Die erfindungsgemäße Kautschukmischung enthält wenigstens einen Dienkautschuk, der ausgewählt ist aus der Gruppe bestehend aus natürlichem Polyisopren und synthetischem Polyisopren und Butadien-Kautschuk und Styrol-Butadien-Kautschuk.

Die Menge des Dienkautschuks, der ausgewählt ist aus der Gruppe bestehend aus natürlichem Polyisopren und synthetischem Polyisopren und Butadien-Kautschuk und Styrol-Butadien-Kautschuk, beträgt 0,1 bis 99,9 phr.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlichen Polyisoprene mit einem oder mehreren synthetischen Polyisoprene denkbar.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem mittleren Molekulargewicht von 100.000 bis 600.000 g/mol (einhunderttausend bis sechshunderttausend Gramm pro Mol). Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften der Kautschukmischung erzielt.

Das eingesetzte Polybutadien kann mit den oben beim Styrol-Butadien-Kautschuk genannten Modifizierungen und Funktionalisierungen endgruppenmodifiziert und/oder entlang der Polymerketten funktionalisiert sein.

Gemäß einer bevorzugten Weiterbildung der Erfindung werden in der Kautschukmischung wenigstens zwei verschiedene Dienkautschuk-Typen eingesetzt.

Zusätzlich kann die erfindungsgemäße Kautschukmischung weitere Dienkautschuke in vergleichsweise geringen Mengen, wie 0,1 bis 20 phr enthalten. Der weitere Dienkautschuk ist dabei ausgewählt aus der Gruppe enthaltend epoxidiertem Polyisopren und/oder Styrol-Isopren-Kautschuk und/oder Flüssigkautschuken mit einem Molekulargewicht Mw von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem Acrylnitrilbutadien-Kautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, und/oder Schuhsohlen zum Einsatz.

Bevorzugt enthält die erfindungsgemäße Kautschukmischung jedoch keinen weiteren der genannten Dienkautschuke, d.h. 0 phr weitere der genannten Dienkautschuke. In dieser Ausführungsform der Erfindung besteht das Kautschuk-System daher aus natürlichem Polyisopren und/oder synthetischem Polyisopren und/oder Butadien-Kautschuk und/oder Styrol-Butadien-Kautschuk, wobei für die genannten Kautschuke die oben genannten Beschreibungen gelten. Mit einer derartigen Kautschukmischung werden besonders gute Eigenschaften hinsichtlich des Rollwiderstandsverhalten sowie der sonstigen physikalischen Eigenschaften erzielt, sodass diese besonders für die Anwendung im Fahrzeugreifen geeignet ist.

Gemäß einer bevorzugten Ausführungsform der Erfindung enthält die Kautschukmischung 5 bis 99,9 phr, besonders bevorzugt 10 bis 99,9 phr, ganz besonders bevorzugt 20 bis 99,9 phr wenigstens eines natürlichen und/oder synthetischen Polyisoprens, wobei auch ein Gemisch verschiedener natürlicher und/oder synthetischer Polyisoprene denkbar ist.

Gemäß einer besonders vorteilhaften Weiterbildung der Erfindung enthält die Kautschukmischung 30 bis 70 phr, besonders bevorzugt 40 bis 60 phr, ganz besonders bevorzugt 45 bis 55 phr, zumindest eines natürlichen und/oder synthetischen Polyisoprens. Mit einer derartigen Kautschukmischung werden besonders gute Eigenschaften hinsichtlich des Rollwiderstandsverhaltens sowie den übrigen Eigenschaften, wie insbesondere den Reißeigenschaften, erzielt. Bevorzugt enthält diese Kautschukmischung hierbei 30 bis 70 phr, bevorzugt 35 bis 55 phr wenigstens eines Butadien-Kautschuks, wie insbesondere ein low-cis-Polybutadien (Polybutadien mit einem cis-Anteil von 20 bis 90 Gew.-%) und/oder ein Butadien-Kautschuk mit einem hohen cis-Anteil (von größer als 90 Gew.-%), und/oder wenigstens eines Styrol-Butadien-Kautschuks und 4 bis 20 phr des oben beschriebenen Polymers welches zu 84 bis 88 Gew.% aus Ethylenoxid und zu 2 bis 4 Gew.% aus Propylenoxid und zu 10 bis 12 Gew.% aus Allylglycidylether aufgebaut ist

Gemäß einer weiteren besonders vorteilhaften Weiterbildung der Erfindung enthält die Kautschukmischung 70 bis 99,9 phr, bevorzugt 75 bis 99,9 phr, besonders bevorzugt 75 bis 95 phr, ganz besonders bevorzugt 75 bis 91 phr, wiederum besonders bevorzugt 75 bis 85 phr, zumindest eines natürlichen und/oder synthetischen Polyisoprens.

Mit einer derartigen Kautschukmischung werden besonders gute Eigenschaften hinsichtlich des Rollwiderstandsverhaltens sowie den übrigen Eigenschaften, wie insbesondere den Reißeigenschaften, erzielt. Bevorzugt enthält diese Kautschukmischung hierbei 5 bis 25 phr, bevorzugt 10 bis 25 phr wenigstens eines Butadien-Kautschuks, wie insbesondere ein low-cis-Polybutadien (Polybutadien mit einem cis-Anteil von 20 bis 90 Gew.-%) und/oder ein Butadien-Kautschuk mit einem hohen cis-Anteil (von größer als 90 Gew.-%), und/oder wenigstens eines Styrol-Butadien-Kautschuks und 4 bis 40 phr des oben beschriebenen Polymers welches zu 84 bis 88 Gew.% aus Ethylenoxid und zu 2 bis 4 Gew.% aus Propylenoxid und zu 10 bis 12 Gew.% aus Allylglycidylether aufgebaut ist

Die erfindungsgemäße Kautschukmischung enthält zudem, insbesondere für die Anwendung im Fahrzeugreifen, wenigstens einen Füllstoff. ,der zumindest 0,1 bis 100 phr wenigstens eines Rußes enthält Bevorzugt enthält sie 10 bis 300 phr, bevorzugt 30 bis 300 phr, besonders bevorzugt 30 bis 150 phr, zumindest eines Füllstoffs.

Hierbei kann es sich um alle dem Fachmann bekannten Füllstoffe handeln, wie Ruß, Kohlenstoffnanoröhrchen oder auch helle Füllstoffe, wie Alumosilicate, Schichtsilikate wie Kaolin, Calciumcarbonat (Kreide), Kieselsäure, Stärke, Magnesiumoxid, Titandioxid, oder Kautschukgele.

Zinkoxid zählt im Rahmen der vorliegenden Erfindung nicht zu den hellen Füllstoffen.

Gemäß einer bevorzugten Ausführungsform der Erfindung enthält die Kautschukmischung zusätzlich zu Ruß wenigstens einen hellen Füllstoff, wie Alumosilicate, Schichtsilikate wie Kaolin, Calciumcarbonat (Kreide), Kieselsäure, Stärke, Magnesiumoxid, Titandioxid.

Bevorzugt ist bei allen genannten Ausführungsformen der helle Füllstoff ausgewählt aus der Gruppe bestehend aus Alumosilicaten und/oder Schichtsilikaten wie Kaolin, und/oder Calciumcarbonat (Kreide) und/oder Kieselsäure und/oder Stärke und/oder Magnesiumoxid und/oder Titandioxid.

die erfindungsgemäße schwefelvernetzbare Kautschukmischung enthält als wenigstens einen Füllstoff zumindest 0,1 bis 100 phr, besonders bevorzugt 0,5 bis 50 phr, wenigstens eines Rußes. Mit einer derartigen Rußmenge werden überraschenderweise insbesondere in Kombination mit dem oben genannten Polymer welches zu 84 bis 88 Gew.% aus Ethylenoxid und zu 2 bis 4 Gew.% aus Propylenoxid und zu 10 bis 12 Gew.% aus Allylglycidylether aufgebaut ist verbesserte Rollwiderstandseigenschaften bei einer ausreichenden oder sogar verbesserten elektrischen Leitfähigkeit erzielt.

Gemäß einer weiteren bevorzugten Ausführungsform der Erfindung enthält die erfindungsgemäße schwefelvernetzbare Kautschukmischung als wenigstens einen Füllstoff zumindest 0,1 bis 50 phr, bevorzugt 0,1 bis 10 phr, wenigstens eines Rußes. Mit einer derartigen Rußmenge werden überraschenderweise insbesondere in Kombination mit dem oben genannten welches zu 84 bis 88 Gew.% aus Ethylenoxid und zu 2 bis 4 Gew. % aus Propylenoxid und zu 10 bis 12 Gew.% aus Allylglycidylether aufgebaut ist ausreichende oder sogar verbesserte elektrische Leitfähigkeiten erzielt.

Als Füllstoff enthält die erfindungsgemäße Kautschukmischung in dieser Ausführungsform bevorzugt wenigstens einen hellen Füllstoff, wie Alumosilicate, Schichtsilikate wie Kaolin, Calciumcarbonat (Kreide), Kieselsäure, Stärke, Magnesiumoxid, Titandioxid, bevorzugt in Mengen von 0,1 bis 200 phr, bevorzugt 20 bis 200 phr, besonders bevorzugt 50 bis 200 phr, ganz besonders bevorzugt 70 bis 200 phr, wiederum ganz besonders bevorzugt 90 bis 200 phr, und wiederum bevorzugt 100 bis 170 phr, wobei insbesondere mit Kieselsäure vorteilhafte Eigenschaften hinsichtlich des Rollwiderstandsverhaltens erzielt werden.

Gemäß einer weiteren bevorzugten Ausführungsform der Erfindung enthält die erfindungsgemäße schwefelvernetzbare Kautschukmischung als wenigstens einen Füllstoff zumindest 10 bis 100 phr, bevorzugt 10 bis 50 phr, wenigstens eines Rußes. Mit einer derartigen Rußmenge werden überraschenderweise insbesondere in Kombination mit dem oben genannten welches zu 84 bis 88 Gew.% aus Ethylenoxid und zu 2 bis 4 Gew. % aus Propylenoxid und zu 10 bis 12 Gew.% aus Allylglycidylether aufgebaut ist ausreichende oder sogar verbesserte elektrische Leitfähigkeiten erzielt. Als Füllstoff enthält die erfindungsgemäße Kautschukmischung in dieser Ausführungsform bevorzugt wenigstens einen hellen Füllstoff, wie Alumosilicate, Schichtsilikate wie Kaolin, Calciumcarbonat (Kreide), Kieselsäure, Stärke, Magnesiumoxid, Titandioxid, bevorzugt in Mengen von 0,1 bis 50 phr, bevorzugt 0,1 bis 20 phr, besonders bevorzugt 2 bis 20 phr, ganz besonders bevorzugt 2 bis 10 phr, wobei insbesondere mit Kieselsäure vorteilhafte Eigenschaften hinsichtlich des Rollwiderstandsverhaltens erzielt werden.

Gemäß einer weiteren bevorzugten Ausführungsform der Erfindung enthält die erfindungsgemäße schwefelvernetzbare Kautschukmischung als wenigstens einen Füllstoff zumindest 0,1 phr wenigstens eines Rußes. Mit einer derartigen Rußmenge werden überraschenderweise insbesondere in Kombination mit dem oben genannten welches zu 84 bis 88 Gew.% aus Ethylenoxid und zu 2 bis 4 Gew.% aus Propylenoxid und zu 10 bis 12 Gew.% aus Allylglycidylether aufgebaut ist ausreichende oder sogar verbesserte elektrische Leitfähigkeiten erzielt.

Als Füllstoff enthält die erfindungsgemäße Kautschukmischung in dieser Ausführungsform bevorzugt wenigstens einen hellen Füllstoff, wie Alumosilicate, Schichtsilikate wie Kaolin, Calciumcarbonat (Kreide), Kieselsäure, Stärke, Magnesiumoxid, Titandioxid, bevorzugt in Mengen von 30 bis 200 phr, besonders bevorzugt 50 bis 200 phr, ganz besonders bevorzugt 90 bis 200 phr, wiederum ganz besonders bevorzugt 100 bis 200 phr, wobei Kieselsäure eine bevorzugte Ausführungsform des hellen Füllstoffs ist.

Gemäß einer weiteren bevorzugten Ausführungsform der Erfindung enthält die erfindungsgemäße schwefelvernetzbare Kautschukmischung als wenigstens einen Füllstoff zumindest 0,1 phr wenigstens eines Rußes. Mit einer derartigen Rußmenge werden überraschenderweise insbesondere in Kombination mit dem oben genannten Polymer welches zu 84 bis 88 Gew.% aus Ethylenoxid und zu 2 bis 4 Gew.% aus Propylenoxid und zu 10 bis 12 Gew.% aus Allylglycidylether aufgebaut ist ausreichende oder sogar verbesserte elektrische Leitfähigkeiten erzielt.

Als Füllstoff enthält die erfindungsgemäße Kautschukmischung in dieser Ausführungsform bevorzugt wenigstens einen hellen Füllstoff, wie Alumosilicate, Schichtsilikate wie Kaolin, Calciumcarbonat (Kreide), Kieselsäure, Stärke, Magnesiumoxid, Titandioxid, bevorzugt in Mengen von 10 bis 60 phr, besonders bevorzugt 20 bis 60 phr, ganz besonders bevorzugt 30 bis 60 phr, wiederum ganz besonders bevorzugt 40 bis 50 phr, wobei Kieselsäure eine bevorzugte Ausführungsform des hellen Füllstoffs ist und diese Kautschukmischung insbesondere für die Seitenwand von Fahrzeugreifen geeignet ist.

Gemäß einer weiteren bevorzugten Ausführungsform der Erfindung enthält die Kautschukmischung als wenigstens einen Füllstoff zumindest 0,1 bis 200 phr, bevorzugt 20 bis 200 phr, besonders bevorzugt 40 bis 200 phr, ganz besonders bevorzugt 50 bis 180 phr, wenigstens einen der oben genannten hellen Füllstoffe, bevorzugt wenigstens eine Kieselsäure.

Die genannten Füllstoffe können in den genannten Mengen auch in Kombination miteinander eingesetzt werden.

Dabei sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) und Abrieb- und/oder Reißeigenschaften erzielt.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 115 bis 235 m²/g, und eine CTAB-Oberfläche (gemäß ASTM D 3765) von 30 bis 400 m²/g, bevorzugt von 30 bis 250 m²/g, besonders bevorzugt von 80 bis 250 m²/g und ganz besonders bevorzugt von 80 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z.B. Zeosil^{®} 1165 MP der Firma Rhodia), zum Einsatz kommen.

Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.

Zinkoxid gehört im Rahmen der vorliegenden Erfindung nicht zu den Füllstoffen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH2 oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363^{®} von der Firma Evonik Industries vertrieben werden.

Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Weiterhin ist es vorteilhaft, wenn die erfindungsgemäße Kautschukmischung wenigstens einen Weichmacher enthält, wobei die Gesamtmenge an Weichmacher bevorzugt 5 bis 100 phr, bevorzugt 5 bis 50 phr, beträgt. Hierdurch ergibt sich insbesondere in Kombination mit den oben genannten Bestandteilen eine besonders gute Prozessierbarkeit der Kautschukmischung und insbesondere eines daraus hergestellten Extrudates. Insbesondere durch eine vergleichsweise hohe Menge an Weichmacher von 15 bis 100 phr, bevorzugt 20 bis 100 phr, bevorzugt 24 bis 100 phr, lässt sich die Kautschukmischung, insbesondere mit einem vergleichsweise hohen Füllstoffgehalt von 50 bis 300 phr, gut mischen, wodurch eine homogene Verteilung aller Bestandteile ermöglicht wird.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze, bei denen es sich nicht um Weichmacherharze handelt,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der erfindungsgemäßen schwefelvernetzbaren Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5. Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren^{®}, Duralink^{®} und Perkalink^{®} begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, zugegeben. Hierdurch lässt sich aus der erfindungsgemäßen Kautschukmischung ein Vulkanisat, insbesondere für die Anwendung im Fahrzeugreifen, herstellen.

Gemäß einer bevorzugten Weiterbildung der Erfindung werden mehrere Beschleuniger der Kautschukmischung zugegeben.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, wie dem Laufstreifen und/oder der Seitenwand und/oder in wenigstens einem inneren Bauteil.

Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Homprofil und Bandage bezeichnet.

Bevorzugt wird die erfindungsgemäße Kautschukmischung jedoch in Laufstreifen von Fahrzeugreifen verwendet, bevorzugt hierbei wenigstens in der Base von Laufstreifen mit Cap/Base-Konstruktion.

Zur Verwendung in Fahrzeugreifen wird die Mischung bevorzugt in die Form eines Laufstreifens, bevorzugt wenigstens in die Form einer Laufstreifenbase, gebracht und bei der Herstellung des Fahrzeugreifenrohlings wie bekannt aufgebracht. Der Laufstreifen, bevorzugt wenigstens die Laufstreifenbase, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in der Tabelle 1 zusammengefasst sind, näher erläutert werden.

Die Vergleichsbeispiele sind mit V, die erfindungsgemäßen Beispiele sind mit E gekennzeichnet.

Die Mischungsherstellung erfolgte nach dem in der Kautschukindustrie üblichen Verfahren unter üblichen Bedingungen in zwei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. Durch Zugabe des Vulkanisationssystems in der zweiten Stufe (Fertigmischstufe) wurde die Fertigmischung erzeugt, wobei bei 90 bis 120 °C gemischt wurde.

Das allgemeine Verfahren zur Herstellung von Kautschukmischungen und deren Vulkanisate ist in "Rubber Technology Handbook", W. Hofmann, Hanser Verlag 1994 beschrieben.

Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Mooney-Viskosität gemäß ASTM D1646 (in Mooney-Einheiten ME)
- Umsatzzeit von 10 % Umsatz (t₁₀, Anvulkanisationszeit) mittels rotorlosem Vulkameter (MDR = Moving Disc Rheometer) gemäß ASTM D 5289-12 /ISO 6502
- Shore-A-Härte bei Raumtemperatur (RT) gemäß DIN ISO 7619-1
- Rückprallelastizität bei RT und 70 °C gemäß DIN 53 512
- Zugfestigkeit, Bruchdehnung und Spannungswert bei 50% sowie 300% Dehnung (Modul 50 und Modul 300) bei Raumtemperatur gemäß DIN 53 504
- Verstärkungsindex (Modul 300 / Modul 50)
- Kontaktwiderstand gemäß DIN 53482
- Oberflächenwiderstand gemäß DIN 53482

### Verwendete Substanzen

^{a)} Naturkautschuk
^{b)} BR: BR 1250H, Fa. Nippon Zeon
^{c)} Polymer: Zeospan^{®} 8030, Fa. Nippon Zeon: Copolymerisations-Verhältnis: 86 Gew.-% Ethylenoxid und 3 Gew.-% Propylenoxid und 11 Gew.-% Allylglycidylether gemäß ¹³C-NMR (D₂O; 90,6 MHz)
^{d)} Sonstige Zusatzstoffe: Weichmacher, Alterungsschutzmittel 6PPD, Klebharz, Zinkoxid, Stearinsäure
^{e)} Beschleuniger: CBS

**Tabelle 1**

| **Bestandteile** | **Einheit** | **V1** | **E1** | **E2** | **E3** |
|---|---|---|---|---|---|
| NR ^{a)} | phr | 50 | 50 | 50 | 50 |
| BR ^{b)} | phr | 50 | 44 | 42 | 40 |
| Polymer ^{c)} | phr | - | 6 | 8 | 10 |
| Ruß N339 | phr | 45 | 45 | 45 | 45 |
| Sonst. Zus. ^{d)} | phr | 30 | 30 | 30 | 30 |
| Beschleuniger ^{e)} | phr | 1,1 | 1,1 | 1,1 | 1,1 |
| Schwefel | phr | 1,6 | 1,6 | 1,6 | 1,6 |

| **Physikalische Eigenschaften** | | | | | |
|---|---|---|---|---|---|
| Shore Härte A bei RT | Shore A | 53 | 54 | 54 | 55 |
| Rückpr. b. RT | % | 55 | 55 | 54 | 53 |
| Rückpr. b. 70 °C | % | 63 | 66 | 65 | 65 |
| Zugfestigkeit | MPa | 16 | 18 | 17 | 17 |
| Bruchdehnung | % | 564 | 580 | 560 | 570 |
| Modul 300 | MPa | 6 | 7 | 7 | 7 |
| Verstärkungsindex | | 6,6 | 7,2 | 7,1 | 7,2 |
| Kontaktwiderstand | Ohm^{∗} cm | 1,0E+07 | 2,9E+06 | 5,4E+05 | 3,3E+05 |
| Oberflächen widerstand | Ohm | 5,7E+04 | 1,9E+04 | 4,1E+03 | 1,0E+04 |

Wie an der Tabelle 1 zu erkennen ist, zeigen die erfindungsgemäßen Kautschukmischungen E1 und E2 und E3 insbesondere durch den größeren Wert für die Rückprallelastizität bei 70 °C verbesserte Rollwiderstandsindikatoren als die Vergleichsmischung V1. Gleichzeitig ist die elektrische Leitfähigkeit auch bei der vergleichsweise geringen Menge an Ruß gegenüber V1 verbessert, was an den geringeren Werten für die Kontakt- und Oberflächenwiderstände von E1, E2 und E3 erkennbar ist. Auch die Steifigkeit (Modul 300) und die Zugfestigkeit sind gegenüber V1 erhöht.

## Patentansprüche

1. Schwefelvernetzbare Kautschukmischung enthaltend wenigstens folgende Bestandteile:
- wenigstens ein Polymer, welches zu 84 bis 88 Gew.-% aus Ethylenoxid und zu 2 bis 4 Gew.-% aus Propylenoxid und zu 10 bis 12 Gew.-% aus Allylglycidylether aufgebaut ist, und
- wenigstens einen Dienkautschuk ausgewählt aus der Gruppe bestehend aus natürlichem Polyisopren und synthetisc2hem Polyisopren und Butadien-Kautschuk und Styrol-Butadien-Kautschuk und
- wenigstens einen Füllstoff, wobei
sie als wenigstens einen Füllstoff zumindest 0,1 bis 100 phr wenigstens eines Rußes enthält.

2. Schwefelvernetzbare Kautschukmischung nach einem der vorherigen Ansprüche,
**dadurch gekennzeichnet, dass** sie als wenigstens einen Füllstoff zumindest 10 bis 100 phr wenigstens eines Rußes und 0,1 bis 50 phr wenigstens eines hellen Füllstoffs wie Alumosilicate, Schichtsilikate wie Kaolin, Calciumcarbonat (Kreide), Kieselsäure, Stärke, Magnesiumoxid, Titandioxid, enthält.

3. Schwefelvernetzbare Kautschukmischung nach einem der vorherigen Ansprüche,
**dadurch gekennzeichnet, dass** sie 40 bis 60 phr zumindest eines natürlichen und/oder synthetischen Polyisoprens enthält.

4. Fahrzeugreifen, **dadurch gekennzeichnet, dass** er in wenigstens einem Bauteil wenigstens eine Kautschukmischung nach einem der Ansprüche 1 bis 3 aufweist.

5. Fahrzeugreifen nach Anspruch 4, **dadurch gekennzeichnet, dass** er die Kautschukmischung wenigstens im Laufstreifen aufweist.

6. Fahrzeugreifen nach Anspruch 5, **dadurch gekennzeichnet, dass** er die Kautschukmischung in der Laufstreifenbase aufweist.

7. Fahrzeugreifen nach einem der Ansprüche 4 bis 6, **dadurch gekennzeichnet, dass** er die Kautschukmischung wenigstens in der Seitenwand aufweist.

## Claims

1. Sulfur-crosslinkable rubber mixture containing at least the following constituents:
- at least one polymer constructed from 84% to 88% by weight of ethylene oxide and 2% to 4% of propylene oxide and 10% to 12% of allyl glycidyl ether and
- at least one diene rubber selected from the group consisting of natural polyisoprene and synthetic polyisoprene and butadiene rubber and styrene-butadiene rubber and
- at least one filler, wherein said mixture contains as at least one filler at least 0.1 to 100 phr of at least one carbon black.

2. Sulfur-crosslinkable rubber mixture according to any of the preceding claims, **characterized in that** it contains as at least one filler at least 10 to 100 phr of at least one carbon black and 0.1 to 50 phr of at least one light-colored filler such as aluminosilicates, phyllosilicates such as kaolin, calcium carbonate (chalk), silica, starch, magnesium oxide, titanium dioxide.

3. Sulfur-crosslinkable rubber mixture according to any of the preceding claims, **characterized in that** it contains 40 to 60 phr of at least one natural and/or synthetic polyisoprene.

4. Pneumatic vehicle tire, **characterized in that** it contains in at least one component at least one rubber mixture according to any of claims 1 to 3.

5. Pneumatic vehicle tire according to Claim 4, **characterized in that it** comprises the rubber mixture at least in the tread.

6. Pneumatic vehicle tire according to Claim 5, **characterized in that** it comprises the rubber mixture in the tread base.

7. Pneumatic vehicle tire according to any of Claims 4 to 6, **characterized in that** it contains the rubber mixture at least in the sidewall.

## Revendications

1. Mélange de caoutchoucs réticulable au soufre contenant au moins les composants suivants :
- au moins un polymère composé de 84 à 88 % en poids d'oxyde d'éthylène et de 2 à 4 % en poids d'oxyde de propylène et de 10 à 12 % en poids d'allylglycidyléther, et
- au moins un caoutchouc diénique choisi dans le groupe comprenant le polyisoprène naturel et le polyisoprène synthétique et le caoutchouc butadiène et le caoutchouc styrène-butadiène et
- au moins une charge,
ledit mélange contenant comme au moins une charge au moins 0,1 à 100 parties pour cent de caoutchouc d'un noir de carbone.

2. Mélange de caoutchoucs réticulable au soufre selon l'une des revendications précédentes, **caractérisé en ce qu'**il contient comme au moins une charge au moins 10 à 100 parties pour cent de caoutchouc d'au moins un noir de carbone et 0,1 à 50 parties pour cent de caoutchouc d'au moins une charge claire telle que des aluminosilicates, des phyllosilicates tels que le kaolin, le carbonate de calcium (craie), de la silice, de l'amidon, de l'oxyde de magnésium, du dioxyde de titane.

3. Mélange de caoutchoucs réticulable au soufre selon l'une des revendications précédentes, **caractérisé en ce qu'**il contient 40 à 60 parties pour cent de caoutchouc d'au moins un polyisoprène naturel et/ou synthétique.

4. Pneumatique de véhicule, **caractérisé en ce qu'**il contient dans au moins un composant au moins un mélange de caoutchoucs selon l'une des revendications 1 à 3.

5. Pneumatique de véhicule selon la revendication 4, **caractérisé en ce qu'**il comporte le mélange de caoutchoucs au moins dans la bande de roulement.

6. Pneumatique de véhicule selon la revendication 5, **caractérisé en ce qu'**il comporte le mélange de caoutchoucs dans la base de la bande de roulement.

7. Pneumatique de véhicule selon l'une des revendications 4 à 6, **caractérisé en ce qu'**il comporte le mélange de caoutchoucs au moins dans le flanc.
